# EUROPEAN PATENT APPLICATION

(11) **EP 4 763 611 A1**
(43) Date of publication of application: **24.06.2026**
(21) Application number: 24221712.3
(22) Date of filing: 19.12.2024
(51) Int. Cl.: B60P 3/34

(54) **EXTENDABLE RECREATIONAL VEHICLE**

(71) Applicant: Tóth és Fiai Kft., 5091 Tószeg Jász-Nagykun-Szolnok (HU)
(72) Inventor: Tóth, Tibor, 5091 Tószeg (HU)
(74) Representative: Araczki, Csaba

(57) **Abstract**

An extendable RV (100) having a body (100a) with a support frame (1) fixed thereto, wherein the support frame (1) has sealing profiles (3) and a box (2) is inserted into the support frame (1), wherein a moving unit (7) is connected to the lower part of the box (2), characterised in that, the support frame (1) is further provided with spacers between the sealing profiles (3) at least on the lower side of the support frame (1) facing the box (2), the moving unit (7) comprising an actuator (13) attached to a guide frame (8) and a control unit, the guide frame (8) being attached to the support frame (1) and to the body (100a).

## Description

### The field of the invention

The object of the invention relates to an extendable RV, particularly to an RV suitable for extending the rear living space.

### The state of the art

RVs are vehicles designed for both transport and housing. Such vehicles are used especially for holidays, so there is no need to rent accommodation or plan a holiday, and one can spend the night in the RV, stopping anywhere, in the comfort level depending on the RV. A typical disadvantage of RVs is that they are limited in size due to road conditions, transport options and the weight and price of the car. The limited size of the RV means that the kitchen and living area can often be designed only as a compromise sleeping area.

Patent document US 8573666 B2 describes an RV with a laterally extendable sleeping part to provide a more comfortable sleep. The movement is accomplished by having a plurality of rails mounted on each outer side of the movable part, the rails being connected on each side by parallel rods with rollers on each side. The disadvantage of this design is that the interior of the RV is open to the outside when the RV is open. This means that any rainfall, water or outside temperature may affect the conditions inside. Furthermore, the moving mechanism itself is exposed to the environment and can be easily damaged.

Patent document EP 3470265 B1 shows another RV with a similar extendable sleeper section. The side walls of the rear part of the RV are movable by placing rails, rollers and insulation on the outside of the movable side wall. In this way, when the side walls are moved to the open position, the insulation prevents the outside environment from entering the living area. The disadvantage of this design is that the insulation around moving parts may not be perfect, and the moving parts are exposed to the outside environment and are easily damaged.

As a result of the above, there is a need for an RV whose rear sleeping area can be extended and the moving units of the movable side walls of the sleeping area are durable, do not damage easily and the interior living space is protected from the external elements.

### Brief description of the invention

The present invention is based on the recognition that by placing the moving units of the side wall part of the RV inside the RV, the opening of the interior of the RV to the outside can be prevented, and the moving unit is not exposed to the outside conditions, thus further ensuring its proper operation.

Pursuant to the above, the present invention relates to an extendable RV having a body, a support frame fixed thereto, wherein the support frame has sealing profiles and a box is inserted into the support frame, wherein a moving unit is connected to the lower part of the box, characterised in that, that the support frame is further provided with spacers between the sealing profiles at least on the lower side of the support frame facing the box, the moving unit comprising an actuator attached to a guide frame and a control unit, the guide frame being attached to the support frame and the body. Preferred embodiments of the extendable RV according to the invention have been defined in the sub claims.

In the figures
Figure 1 shows a perspective side view of the RV of the invention with extended living space;
Figure 2 shows a perspective side view of the support frame according to the invention;
Figure 3 shows the box according to the invention illustrated from the living space side;
Figure 4 shows the exploded view of the roller cart according to the invention;
Figure 5 shows the exploded view of the moving cart according to the invention;
Figure 6 shows a perspective side view of the roller cart according to the invention attached to the bumper.

### Detailed description of the invention

The essence of the RV according to the invention consists in that internal moving unit can be used to extend the side of the RV in such a way that the interior is still sealed off from external influences and the moving units are not exposed to external influences either.

In the context of the present invention, an RV is a vehicle which is suitably adapted for at least temporary habitation. That is, it has a sleeping compartment, various storage units, a bathroom and a kitchen.

In the context of the present invention, the interior space is understood to be the interior space defined by the body and side walls of the RV in which the persons reside.

The RV according to the invention uses the usual tools and designs common for the professional with the possibility of extending the rear space. In other words, the RV has a box in the rear compartment, which is either mounted on the side wall(s) or on the rear wall and is movable by means of a moving unit.

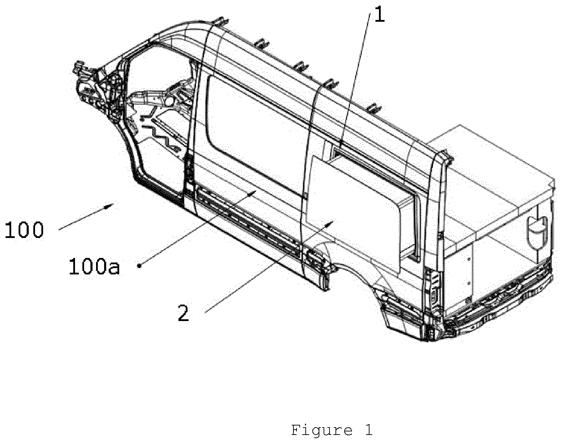

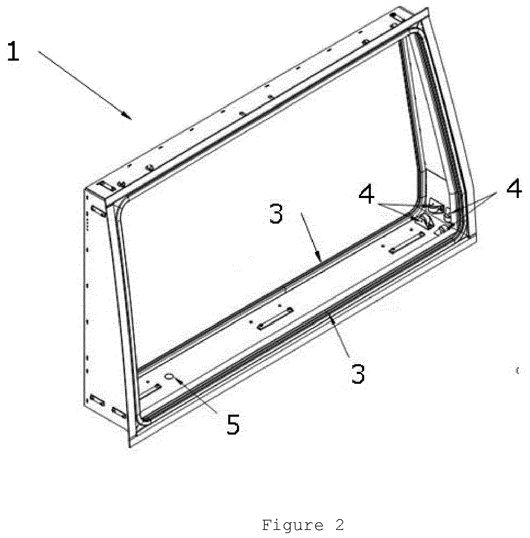

Figure 1 illustrates the RV 100 according to the invention, comprising a support frame 1 attached to and fitting in line with the body 100a of the RV 100 by adhesive and/or bolting, and a box 2 fitting therein, which when closed fits into the support frame 1 and is approximately on the same plane as the side wall of the RV 100. Figure 2 shows the support frame 1 as a stand-alone unit, where it can be seen that the support frame 1 is also fitted with sealing profiles 3 to ensure the separation of the interior and exterior spaces in the RV 100 with both open and closed box 2. The movement of the box 2 in the support frame 1 is done by rollers 4 fixed in the support frame 1. The rollers 4 are positioned between the sealing profiles 3. The support frame 1 also has a drain 5 to remove any water that may enter.

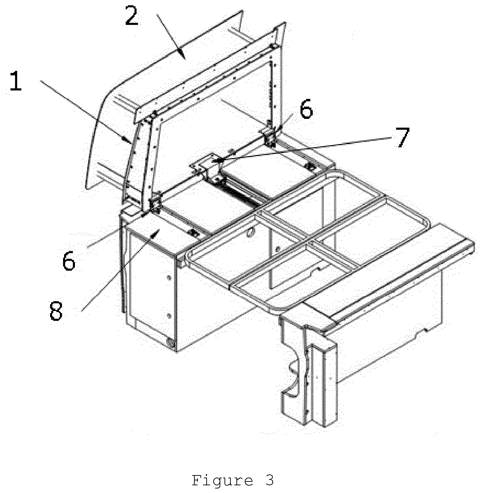

Figure 3 shows the box 2 as seen from the inside. The box 2 is connected to two roller carts 6 and a moving unit 7. The roller carts 6 and the moving unit 7 are connected to the support frame 1 via a guide frame 8. The guide frame 8 provides the path for the roller carts 6 and the moving unit 7 and the connection to the support frame 1. Furthermore, bumpers 11 and sensors 12 are connected to the support frame 1 by means of a support plate. The invention further comprises a control unit in electronic communication with the moving unit 7 and the sensors.

The role of the support frame 1 is to hold the box 2 in position and to isolate the moving unit 7 from the outside world to protect the moving unit 7 and the interior of the RV 100 from external influences. Furthermore, the support frame 1 provides the connection between the body 100a of the RV 100 and the moving unit 7 that moves the box 2. Furthermore, the sealing profiles 3 ensure that the interior of the RV 100 is closed in any position of the moving box 2. The support frame 1 can be fixed to the body 100a by bolting and/or gluing. Between a part of the sealing profiles 3, a drain 5 is provided to allow the evacuation of any liquid or moisture that may nevertheless enter.

The role of the box 2 is to make the interior variable in size. The box 2 is open on one side with sheets (preferably lightweight plywood with core material and external waterproof covering), so that the interior space of the box 2 is accessible. The outer sides of the box 2 are separated from the support frame 1 by spacers on the support frame 1. The role of the spacers is to reduce the contact area between the box 2 and the support frame 1. The spacer is preferably of roller design to minimise the possibility of damage and friction due to the movement of the box 2. The rollers 4 on the support frame 1 roll on the outside of the box 2 and the sealing profiles 3 prevent the inside of the moving box 2 from coming into contact with the outside. Of course, we do not exclude the case where only the bottom, or possibly the bottom and the sides, are fitted with rollers 4 on the support frame 1.

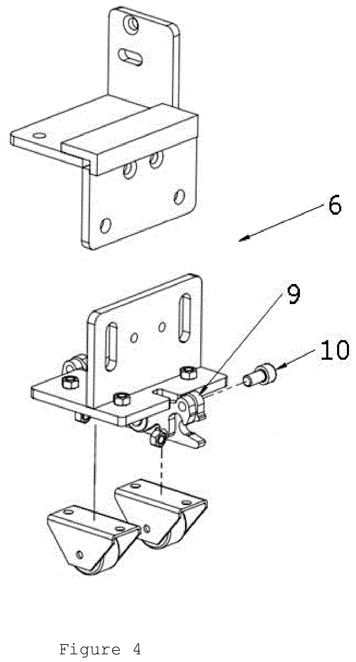

Figure 4 shows the exploded view of the roller cart 6. The roller cart 6 contains rollers and a manual clamp 9. The roller cart 6 provides stability for moving the box 2 as a roller cart 6 is positioned on both edges of the box 2, so when the box 2 is moved, the roller carts 6 provide support for the box 2.

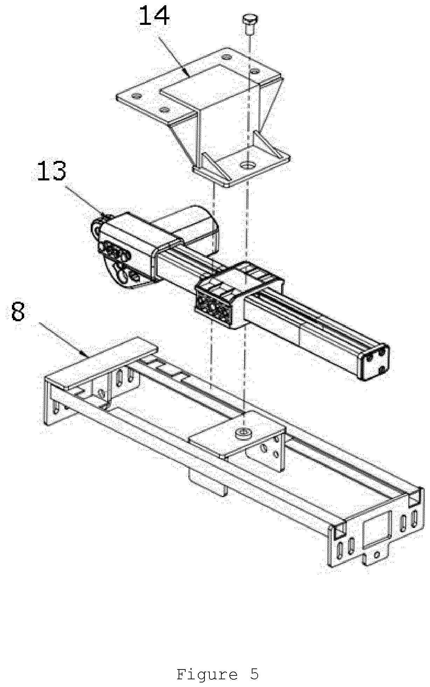

Figure 5 shows a blown-up representation of the moving unit 7. The role of the moving unit 7 is to move the box 2. The moving unit 7 comprises at least one actuator 13, which is attached to the guide frame 8 and the box 2 by a detachable connection, preferably a bolted connection. If the width of the box 2 exceeds 1600 mm, it may be advisable to use at least two actuators 13 to ensure smooth movement. The actuator 13 is connected to the box 2 by a moving cart 14 with a detachable joint, preferably a bolted joint, allowing the actuator 13 to move the box 2. Due to the detachable joints, the actuator 13 and the moving cart 14 can be detached from the box 2, so that the box 2 can be moved manually.

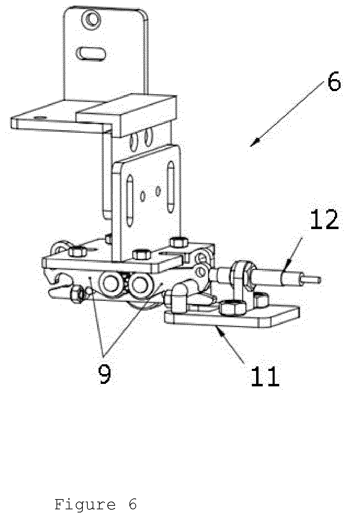

Figure 6 shows the bumper 11 with a sensor 12 that fixes the roller cart 6 in its end position. The role of the bumpers 11 is to determine the end positions of the box 2 beyond which the box 2 cannot be moved. These two end positions are the closed end position, where the box 2 is substantially fits into the plane of the body 100a of the RV 100, and the open end position, where the box 2 is fully extended and extends beyond the plane of the body 100a of the RV 100. In the case of manual movement, the locking screw 10 is removed from the manual clamp 9 of the cart 6, leaving the U-shaped receiver of the manual clamp 9 free. When the bumper 11 is reached, the U-shaped gripper of the manual clamp 9 is caught in the bumper 11. In the case of electronic movement, the U-shaped receiver of the manual clamp 9, fixed by the locking screw 10, shall strike the bumper 11 and this shall indicate the end position.

The role of the sensors 12 is to indicate the position of the box 2 as it approaches the bumpers 11. More specifically, if the box 2 arrives at one of the end positions bounded by the bumpers 11, the role of the sensors 12 is to indicate that the box 2 has arrived at one of the end positions, the moving unit 7 must be stopped so as not to overload the actuator 13. These sensors 12 can be pressure sensors, which give a signal in the case of a roller cart 6 in contact with the bumper 11, or more precisely with the sensor 12. The sensors 12 can also be proximity sensors, inductive sensors or infrared sensors which, if the box 2 is in a certain proximity to one of the bumpers 11, interrupt the circuit and stop the actuator 13 and thus the movement of the box 2. Furthermore, the use of mechanical sensors or switches is not excluded.

The role of the control unit is to move the box 2 without manual force. To do this, it is electrically connected to at least one actuator 13 of the moving unit 7 and the sensors 12.

During operation, the box 2 can be moved between the closed end position and the open end position. The closed end position is defined as the position in which the outer side of the box 2 is aligned with the body 100a, i.e. the box 2 does not protrude laterally or rearwardly from the body 100a. An open end position is defined as a position in which the outer side of the box 2 breaks the body line of the body 100a and protrudes from the side or rear surface of the RV 100.

To move the box 2 out of its closed end position, the control unit is switched on, preferably by means of a button or switch. When the control unit is switched on, it activates the actuator 13, which starts moving the box 2 via the moving unit 7. In this way, the box 2 moves from the closed end position to the open end position on the rollers 4 fixed to the support frame 1, while the roller carts 6 support the box 2. Stopping the movement of the box 2 is achieved by either disconnecting the control unit or by the box 2 reaching the closed end position and the sensors 12 interrupting the circuit, thus disconnecting the actuator 13 from the power supply.

In case of manual control, the actuator 13 and the moving cart 14 can be detached from the box 2 and the box 2 can be moved manually. In this case, the manual clamps 9 on the roller carts 6 supporting the box 2 can be used to lock the box 2 in position. And in each end position, the bumpers 11 themselves hold the box 2 instead of the sensors 12 which are deactivated.

The advantage of the solution according to the invention is that it allows the interior space of the RV to be extended without the external influences having access to the interior space of the RV and/or the moving mechanism.

## Claims

1. An extendable RV (100) having a body (100a) with a support frame (1) fixed thereto, wherein the support frame (1) has sealing profiles (3) and a box (2) is inserted into the support frame (1), wherein a moving unit (7) is connected to the lower part of the box (2), **characterised in that**, the support frame (1) is further provided with spacers between the sealing profiles (3) at least on the lower side of the support frame (1) facing the box (2), the moving unit (7) comprising an actuator (13) attached to a guide frame (8) and a control unit, the guide frame (8) being attached to the support frame (1) and to the body (100a).

2. The extendable RV (100) according to claim 1, **characterised in that** the spacers are rollers (4).

3. The extendable RV (100) according to claim 1 or 2, **characterised in that** the support frame (1) is provided with rollers (4) on each side of the support frame (1) facing the box (2).

4. The extendable RV (100) according to any one of the preceding claims, **characterised in that** the support frame (1) is further provided with a drain (5).

5. The extendable RV (100) according to any one of the preceding claims, **characterised in that** the box (2) is further provided with roller carts (6) attached to the lower part of the box (2) and the guide frame.

6. The extendable RV (100) according to claim 5, **characterised in that** the roller carts (6) are provided with a manual clamp (9).

7. The extendable RV (100) according to any one of the preceding claims, **characterised in that,** the guide frame (8) is further provided with bumpers (11) and sensors (12) on the side adjacent to the support frame (1) and on the side remote from the support frame (1), the sensors being further connected to the control unit.
